# EUROPÄISCHE PATENTSCHRIFT

(11) **EP 0 578 126 B1**
(45) Veröffentlichungstag und Bekanntmachung des Hinweises auf die Patenterteilung: **13.05.1998**
(21) Anmeldenummer: 93110482.2
(22) Anmeldetag: 01.07.1993
(51) Int. Cl.: F24H 1/20

(54) **Warmwasser-Schichtenspeicher mit fremdenergiefreiem Gegenstromwärmetauscher**
Multi-layered hot water storage tank with countercurrent heat exchanger without external energy source
Réservoir d'eau chaude à température non-uniforme avec échangeur de chaleur à contre-courant sans source d'énergie externe

(30) Priorität: 02.07.1992 DE 4221668
(43) Veröffentlichungstag der Anmeldung: 12.01.1994
(73) Patentinhaber: Leibfried, Ulrich, D-79539 Lörrach (DE)
(72) Erfinder: Leibfried, Ulrich, D-79539 Lörrach (DE)

(56) Entgegenhaltungen:
- CH-A- 180 906
- DE-A- 3 044 079
- DE-U- 8 703 576
- FR-A- 2 600 146
- DATABASE WPI Section EI, Week 8342, Derwent Publications Ltd., London, GB; Class X25, AN 83-793128 & SU-A-979 711 (CHURKIN R K) 17. Dezember 1982

## Beschreibung

Die Erfindung betrifft einen Wärmespeicher, in dem Wärmeenergie unter Ausbildung einer thermischen Schichtung in dem flüssigen Speichermedium eingespeichert und entnommen werden kann. Besonders vorteilhaft kann die Erfindung zur Erzeugung von warmem Brauchwasser mit Hilfe von Sonnenkollektoren eingesetzt werden. In dem erfindungsgemäßen Wärmespeicher werden Wärmetauscher eingesetzt, die eine Trennung von Brauchwasser und Speichermedium sowie die Trennung von Wärmeträger des Heizkreises (z. B. Solarkreis) und Speichermedium ermöglichen.

Wesentlichen Einfluß auf Wirkungs- und Deckungsgrad der Solaranlage hat die Art der Be- und Entladung. Die **geschichtete** Be- und Entladung weist insbesondere in Verbindung mit einer Solaranlage oder einer Kraft-Wärme-Kopplung wesentliche Vorteile auf:
- Schnelle Verfügbarkeit bereits nach kurzem Beladevorgang
- Hohe Wärmekapazität durch große Temperaturspreizung
- Tiefe Einströmtemperatur für die Solaranlage oder Kraft-Wärme-Kopplungsanlage; dadurch geringe thermische Verluste bei der Solaranlage bzw. guter Wirkungsgrad bei der Erzeugung von Arbeit durch die Wärmekraftmaschine. Tiefe Rücklauftemperaturen sind auch Voraussetzung für den effektiven Betrieb eines Brennwertkessels.
- Geringere thermische Verluste als ein durchmischter Speicher mit gleicher gespeicherter Wärme.

In den meisten Anwendungen im Privathausbereich werden heute allerdings Warmwasserspeicher mit durchmischter Beladung, oftmals auch mit durchmischter Entladung eingesetzt. Die heute bekannten Techniken zur Realisierung der geschichteten Be- und Entladung bringen nämlich jeweils auch entscheidende Nachteile mit sich:
- Bei der direkten Be- und Entladung steht das Trinkwasser im Speichertank, mit Temperaturen, die zwischen der des Kaltwassers und der Warmwasser-Endtemperatur liegen. Dadurch treten verstärkt hygienische Probleme, wie z. B. Legionellenwachstum, auf. Außerdem erfordert diese Technik einen (relativ teuren) Druckspeicher. In Gegenden mit Frostgefahr kann diese Technik nicht in Verbindung mit einer Solaranlage eingesetzt werden.
- Um die Hygieneprobleme zu umgehen wird zur geschichteten Speicherentladung gelegentlich ein externer Wärmetauscher eingesetzt. Dies ist allerdings im Vergleich zu einem im Speicher eingebauten Durchlauferhitzer (mit durchmischter Entladung) wegen der hierfür notwendigen zusätzlichen Installation (Umwälzpumpe, Regelung) relativ aufwendig.
- Wegen Einfriergefahr wird in nördlichen Ländern eine Solaranlage meist in einem Sekundärkreis mit Frostschutzmittel und im unteren Bereich des Speichers angebrachtem Solar-Wärmetauscher betrieben. Stand der Technik zur geschichteten Beladung ist auch hier, stattdessen einen externer Wärmetauscher einzusetzten, der allerdings ebenso den oben erwähnten Zusatzaufwand mit sich bringt.

Techniken zur geschichteten Beladung von Warmwasserspeichern werden in den im folgenden kurz vorgestellten Patentschriften beschrieben:

Das Patent der Deutschen Demokratischen Republik DD 263 113 A1 betrifft eine Vorrichtung zur wirbelfreien Einleitung oder Entnahme von flüssigen Speichermedien in Wärmespeicherbehältern. Eine Trennung des eingeleiteten oder entnommenen Wärmeträgers und des Speichermediums findet nicht statt. Falls Warmwasser oder Heizkreis und Speichermedium getrennt sein sollen, ist der Einsatz externer Wärmetauscher nötig.

In der Europäischen Patentanmeldung EP 05 18 369 A1 wird ein Einspeisrohr beschrieben. Dieses soll die Einschichtung von Wasser in einem Warmwasser-Schichtenspeicher an der seiner Temperatur entsprechenden Stelle ermöglichen. Auch in dieser Schrift wird die Trennung von Wärmeträger und Speichermedium nicht beschrieben und kann nur durch externe Wärmetauscher erfolgen.

Die Offenlegungsschrift des Deutschen Patentamts DE 30 03 688 A1 betrifft eine Solaranlage, bei der eine geschichtete Beladung des Speichers durch Einleiten eines siedenden Wärmeträgers wie Wasserdampf durch ein speziell ausgeführtes Steigrohr in den Speicherbehälter erreicht wird. Wärmetauscher zur Trennung von Brauchwasser, Heizkreis und Speichermedium werden auch in dieser Anmeldung nicht beschrieben.

In der Offenlegungsschrift des Deutschen Patentamts DE 40 29 355 A1 werden Mittel zur Verhinderung der Zerstörung der Temperaturschichtung eines Speichers bei Wärmeentzug oder -zuführung beschrieben. Dies wird durch Anbringen von horizontalen Lochblechen in dem Speicher erreicht. Bei Einsatz von Wärmetauschern in dem Speicher können somit Strömungen aufgewärmten oder abgekühlten Wassers wirbelfrei in den Bereich über bzw. unter dem Lochblech gelangen. Ein Gegenstromwärmeaustausch bei dem Kaltwasser auf Temperaturen nahe der oberen Speichertemperatur erwärmt und das Speicherwasser gleichzeitig auf Temperaturen nahe der Kaltwassertemperatur abgekühlt wird, wird durch die beschriebene Anordnung jedoch nicht ermöglicht.

In dem Schweizer Patent Nr. 180906 wird eine für die vorliegende Erfindung gattungsbildende Anordnung zur Erwärmung von Brauchwasser über den Wärmetauscher eines Warmwasserspeichers beschrieben. Der obere Teil eines Wärmetauscherbehälters kommuniziert oben mit dem Speicher, der untere Teil des Tauschers mit dem unteren Teil des Speichers. Bei Entnahme von warmem Brauchwasser aus dem Wärmetauscher wird in dem Wärmetauscher das Speicherwasser abgekühlt und es sinkt durch eine Röhre ab in den unteren Bereich des Speichers.
Der Betrieb entsprechender Vorrichtungen zeigt zwei Nachteile:
Innerhalb des Wärmetauschers findet kein echter Gegenstromwärmeaustausch statt. In dem Wärmetauscherbehälter findet eine Vermischung des abgekühlten mit wärmerem Speicherwasser statt. Das absinkende Speicherwasser könnte bei einem echten Gegenstromaustausch wesentlich stärker abgekühlt werden, was einer größeren Speicherkapazität entspräche und die eingangs geschilderten Vorteile z. B. für den Betrieb einer Solaranlage bringen würde.
Der Wärmeübergang an dem Wärmetauscherrohrist relativ schlecht aufgrund der Vermischung und dem großen Volumen des Tauscherbehälters, was zu einer schwachen Strömung des Speicherwassers um das Tauscherrohr und zu einer ausgedehnten Temperatur- und Strömungsgrenzschicht führt. Daher ist entweder eine vergleichsweise große und damit teure Wärmetauscherfläche oder eine sehr hohe Speicherwassertemperatur nötig, um die beim Zapfen von Warmwassergeforderte Leistung zu übertragen.

Eine prinzipiell ähnliche Vorrichtung wird in der Offenlegungsschrift des Deutschen Patentamts DE 30 44 079 A1 beschrieben. Zur geschichteten **Be**ladung eines Speichers ist hier mit Abstand über einer im unteren Bereich des Speichers angeordnete Heizvorrichtung (Wärmetauscher-Rohrspirale) eine trichterförmige Leitstruktur angebracht, die in der Mitte oben ein Loch aufweist. Durch dieses Loch soll das durch die Heizvorrichtung erwärmte Wasser gebündelt in dem Speicher nach oben aufsteigen. Oberhalb der Heizvorrichtung sollen mehrere, in verschiedenen Höhen des Speichers angeordnete trichterförmige Leitstrukturen dafür sorgen, daß die Vermischung des aufsteigenden Wassers mit dem übrigen Speicherwasser klein bleibt. Schwebekörper zwischen den Trichtern, die die Trichter verschließen können, sollen bewirken, daß das erwärmte Wasser je nach Temperaturnur bis zu einer bestimmten Höhe aufsteigen kann.
Neben dem komplizierten Aufbau wirkt sich auch bei dieser Erfindung nachteilhaft der Abstand zwischen Leitstruktur und Heizrohrspirale aus, der keinen mischungsfreien Gegenstromwärmeaustausch ermöglicht.
Da sich bei dieser Anordnung kein Rohr an den Leittrichter oberhalb der Heizvorrichtung anschließt, bleiben die die Strömung antreibenden Auftriebskräfte vergleichsweise klein und werden nicht für einen effizienten Wärmeaustausch nutzbar gemacht.

Bei dem Deutschen Gebrauchsmuster DE-U-8 703 576 erstreckt sich ein zentral senkrecht in einem Brauchwasserspeicher angeordnetes Leitrohr über die gesamte Höhe des Speichers. Innerhalb des Leitrohres ist ebenfalls über die gesamte Höhe ein aus mehreren Rohrwindungen bestehender Wärmeübertrager angebracht und innerhalb der Rohrwindungen befindet sich ein Innenrohr. Bei dieser Anordnung ist gegenüber den beiden davor beschriebenen Anordnungen ein besserer Gegenstromwärmeaustausch gegeben, insbesondere dann, wenn es sich bei dem Rohr-Wärmeübertrager um ein Rippenrohr handelt.
Nachteilhaft wirkt sich bei dieser Erfindung aus, daß der Wärmeübertrager nur bei vollständig kaltem Speicher voll wirksam ist. Ist der Speicher zur Hälfte aufgeheizt, so muß das Speichermedium nach Durchströmen der unteren Hälfte des Wärmetauschers bereits aufgeheizt sein, damit die Auftriebskräfte wirksam sind, oder der den Tauscher durchströmende Wärmeträger muß immer heißer werden. Desweiteren sind keine Maßnahmen getroffen, um eine gezielte Umströmung jeder Rohrwindung zu erreichen. Bei der beschriebenen Anordnung liegen die einzelnen Rohrwindungen dicht übereinander, so daß zwischen den Windungen ein schlecht umströmter Totwasserbereich entsteht.

Vorrichtungen zur geschichteten Be- oder Entladung von Wärmespeichern durch Wärmetauscher, bei denen weder thermische Auf- oder Abtriebsströmungen genutzt werden, noch elektrisch betriebene Pumpen eingesetzt werden, sind dem Anmelder nicht bekannt.

Die vorliegende Erfindung betrifft einen Warmwasserspeicher, der die geschichtete Be- und Entladung mittels Gegenstromwärmetauscher ermöglicht. Die Wärmetauscher sollen so ausgebildet und angeordnet sein, daß sie wie in der DE-U-8703 576 Thermosiphonkräfte nutzen, damit das Speicherwasser den Wärmetauscher umströmt, auch sollen die Rohrwindungen der Wärmetauscher eingefaßt sein in Leiteinrichtungen, um Vermischungen zu vermeiden.
Aufgabenstellung der Erfindung ist, daß die Wärmetauscher darüber hinaus eine vollständige Be- und Entladungen des Speichers ermöglichen, d. h., daß die Thermosiphonkräfte bis zum Schluß des Be- bzw, Entladevorgangs wirksam sein sollen. Die Wärmetauscher sollen weiterhin so ausgebildet sein, daß die Wärmetauscherrohre sehr gut umströmt werden und sich ein besserer Wärmeübergang einstellt als bei den oben beschriebenen bekannten Anordnungen mit freier Umströmung der Wärmetauscherrohrwendeln.

Der erfindungsgemäße Speicher wird vorzugsweise drucklos betrieben, wodurch z. B. eine kostengünstige Kunststoffbauweise ermöglicht wird. Insbesondere bei kleinen Speichern müssen die Speicherwände aus einem schlecht wärmeleitenden Material aufgebaut sein, um einen schnellen Temperaturausgleich zwischen den wärmeren und kälteren Wasserschichten zu vermeiden.
Der Wärmetauscher zur Entladung (z. B. zur Brauchwassererwärmung) ist im oberen Bereich des Speichers angeordnet. Er ist aufgebaut aus einem spiralförmig gebogenen Wärmetauscherrohr, das vorzugsweise mit oberflächenvergrößernden Rippen oder Lamellen versehen ist und einer die Rohrspirale einschließenden Leitstruktur aus schlecht wärmeleitendem Material. Kaltes Brauchwasser wird beim Durchströmen des Wärmetauschers erwärmt. Gleichzeitig wird das heiße Speicherwasser in der Umgebung des Wärmetauscherrohres abgekühlt. Dieses abgekühlte Speicherwasser hat nun eine größere Dichte. Die Strömungsleitstruktur bewirkt, daß das abgekühlte Wasser nicht in dem Speicher frei absinken und sich mit wärmerem Wasser vermischen kann. An die Leitstruktur schließt sich ein Abströmkanal an, durch den das abgekühlte Wasser vermischungsfrei nach unten absinkt. Hierdurch wird warmes Wasser in den Eingang des Wärmetauschers nachgesaugt und es stellt sich eine Gegenströmung zum Brauchwasser durch den Wärmetauscher ein.
Da sich der Wärmetauscher im oberen Bereich des Speichers befindet und das Speicherwasser beim Eintritt in das Abströmrohr 6 bereits voll abgekühlt ist, sind die Thermosiphonkräfte bis zur vollständigen Entladung wirksam.

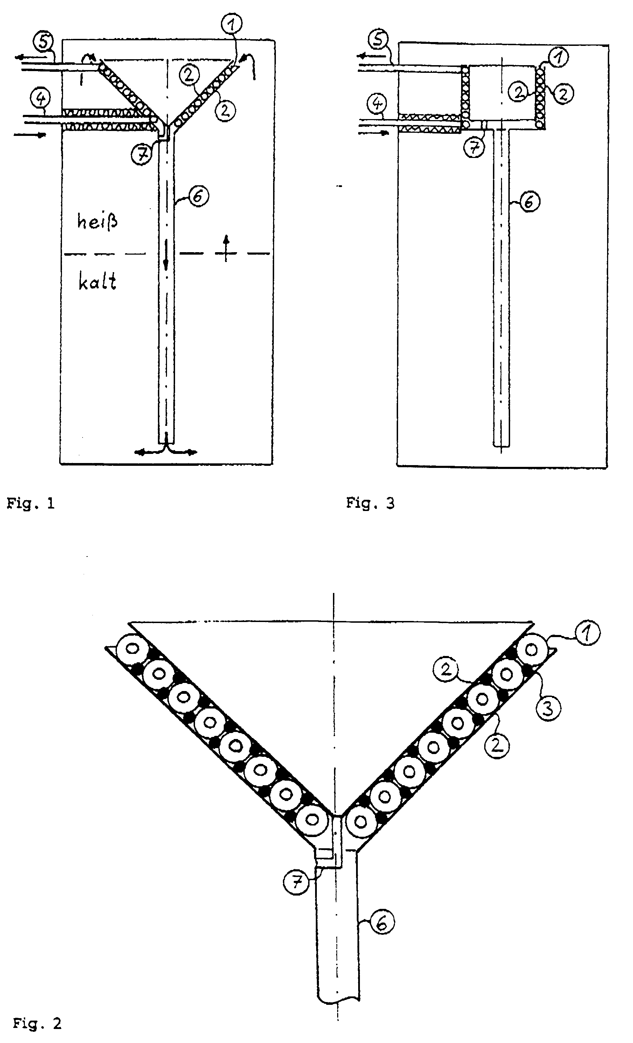

In Figur 1 und 2 ist der Gesamtaufbau des Wärmetauschers dargestellt:

Der Wärmetauscher wird vorzugsweise aus einem Rippenrohr 1 (vorzugsweise Kupfer) aufgebaut. Das Rippenrohr ist spiralförmig gewunden und zwischen zwei Trennflächen 2 angeordnet, wodurch erreicht wird, daß das Speicherwasser durch die Zwischenräume zwischen den Rippen strömen muß. Um eine möglichst gleichmäßige Durchströmung der Rippen auch in der Nähe des Kernrohres zu bewirken, sind vorteilhafterweise Leitstrukturen zwischen den Windungen des Rippenrohres angebracht. Wichtig ist dabei auch, daß der Spalt zwischen Rippen und Trennflächen 2 abgedichtet wird. Durch das Einbringen einer dichtenden und die Strömung in die Innenbereiche des Rippenrohres zwischen dem Kernrohr lenkenden Leitstruktur wird eine deutliche Verbesserung des vermischungsarmen Gegenstromwärmeaustausches erreicht. Eine erfindungsgemäße Möglichkeit zur Realisierung einer solchen Leitstruktur ist z. B. ein eingelegtes Gummiband 3 (siehe Figur 2).

Eine andere Möglichkeit zur besseren Ausnutzung der Rippenrohrfläche stellt gemäß den Ansprüchen 9 und 10 der Einsatz von Rippenrohren mit eckigen Rippen dar oder deren Annäherung durch Umbiegen der Ränder runder Rippen.

Die Trennflächen sind aus einem schlecht wärmeleitenden Material, vorzugsweise aus Kunststoff, aufgebaut, um einen direkten thermischen Kontakt zwischen kühleren und wärmeren Bereichen des Wärmetauschers und zum umgebenden heißen Speicherwasser zu vermeiden. Der innerhalb des Speichers isolierte Kaltwasseranschluß 4 befindet sich am tiefer bzw. innen gelegenen Ende der Rippenrohrspirale, der Warmwasserausgang 5 am höher bzw. außen gelegenen Ende. Speicherwasser das von oben durch den Wärmetauscher absinkt, strömt auf diese Weise im Kreuzgegenstrom zum aufsteigenden Brauchwasser durch den Wärmetauscher. Der durch die Trennflächen 2 gebildete Kanal mündet in einen Abströmkanal 6, der aus einem schlecht wärmeleitenden Material, vorzugsweise aus einem Kunststoffrohr, aufgebaut ist. Das Abströmrohr reicht bis wenige Zentimeter über den Speicherboden, wo das abgekühlte Speicherwasser eingeschichtet wird.

Der Querschnitt des Abströmkanals darf nicht zu groß sein, da zwischen jeder Entnahme von Warmwasser auf Grund eines Druckausgleichs zwischen dem Abströmrohr und dem restlichen Tank das Rohr mit Warmwasser entsprechend der Schichthöhe im Speicher gefüllt wird. Dieses warme Wasser muß bei jeder erneuten Warmwasserentnahme nach unten in den kühleren Speicherteil verdrängt werden, wodurch zum einen die Ausbildung des Thermosiphonkreislaufes behindert wird, zum anderen die Schichtung im Warmwasserspeicher abgebaut wird. Wird der Querschnitt des Abströmrohres allerdings zu klein, so wird der Strömungswiderstand zu groß, wodurch wiederum der Thermosiphon-Kreislauf behindert wird.

Der gesamte Wärmetauscher ist möglichst weit oben im Speicher angeordnet, damit sich auch bei einem weitgehend entladenen Speicher mit einer schmalen Heißwasserschicht eine Thermosiphonströmung noch ausbilden kann.
Gleichzeitig wird ein Gegenstromwärmeaustausch umso besser erreicht, je höher die Anzahl der Rippenrohrwindungen ist, wobei andererseits auch hier der Strömungswiderstand nicht zu hoch werden darf.

Der thermodynamisch beste Gegenstrom-Wärmeaustausch wird dann erreicht, wenn der Druckverlust im gesamten Wärmetauscher so groß ist, daß der sich einstellende mittlere Speicherwasserstrom ungefähr dem typischen Brauchwasserstrom entspricht.

In Figur 1 bis 5 sind beispielhaft drei erfindungsgemäße Anordnungen, die den oben genannten Bedingungen gerecht werden, dargestellt

In Figur 1 und 2 ist das Rippenrohr in Form einer kegelförmigen Spirale gewunden; die kegelförmigen Trennflächen münden in das Abströmrohr. An der tiefsten Stelle der Trennkegel ist ein zum Strömungskanal dichter Durchbruch 7 zwischen der Unter- und der Oberseite des Wärmetauschers vorgesehen, damit auch das anfangs heiße Wasser innerhalb des Wärmetauscherkegels durch die aufsteigende Schicht kalten Wassers verdrängt werden kann und umgekehrt das kalte Wasser bei Speicherbeladung abströmen kann.

In Figur 3 ist das Rippenrohr zylinderförmig gewunden. Auch hier ist ein Durchbruch zwischen Unter- und Oberseite der Trennflächen erforderlich, falls das Wasservolumen innerhalb des Wärmetauscher-Zylinders genutzt werden soll.

In Figur 4 ist das Rippenrohr in Form einer horizontalen Spirale gewunden, an die sich eine oder mehrere vertikale Windungen anschließen, um den Thermosiphonkreislauf in der Startphase anzuregen.

Durch Versuche wurden aus dem komplexen Zusammenspiel der unterschiedlichen Parameter günstige Dimensionierungen des Systems ermittelt. Im folgenden wird als Beispiel die Dimensionierung für einen Warmwasserspeicher mit ca. 500 l Speicherinhalt (Wasserhöhe: ca. 1,5 m), einer Heißwassertemperatur im Speicher von ca. 65 °C, einer Kaltwassertemperatur von ca. 7 °C und einer typischen Entnahmemenge von 10 l/min gegeben, bei der ein standardmäßig verfügbares Rippenrohr eingesetzt wird:
- Kupfer-Rippenrohr mit Innendurchmesser 10 mm, Außendurchmesser 12 mm, Ripphöhe 4.5 mm, Rippabstand 1.75 mm, Gesamtlänge: 6 m
- Trichterförmige Anordnung mit 9 Windungen, oberer Durchmesser 300 mm
- Innendurchmesser des Abströmrohres 50 mm

Mit dieser Anordnung konnte eine Abkühlung des Speicherwassers um ca. 17 K bei vollem Speicher und 28 K bei fast leerem Speicher erreicht werden. Die Brauchwassertemperatur lag anfangs bei ca. 57 °C und sank gegen Ende der Entladung auf ca. 45 °C ab.

Dies entspricht einer ca 2.5 fachen Speicherkapazität gegenüber dem gleichen Speicher mit der gleichen Anfangstemperatur, dem gleichen Wärmetauscher, jedoch gemischter Entladung, bei einer Nutztemperatur von 45 °C.

Computersimulationen zeigen, daß noch günstigere Systemdimensionierungen möglich sind.

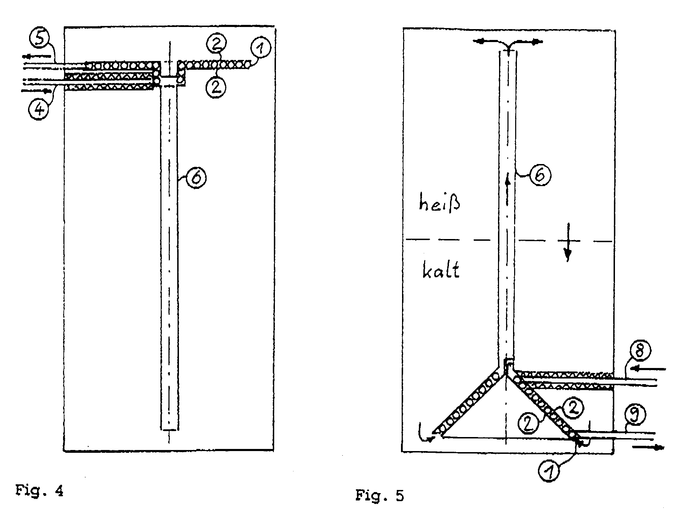

Das gleiche Wärmetauscherprinzip ist nach Anspruch 2 auch für eine geschichtete Speicherbeladung einsetzbar. Hierbei wird die gesamte Anordnung umgekehrt in dem Speicher angebracht (siehe Figur 5), so daß sich der Wärmetauscher im unteren Speicherbereich befindet und das in diesem Fall "Aufströmkanal" genannte Rohr bis wenige Zentimeter unter die obere Speicherbewandung bzw. die Wasseroberfläche reicht.

## Patentansprüche

1. Warmwasser-Schichtenspeicher, bestehend aus einem in dem Speichervolumen angeordneten, aus mehreren Rohrwindungen bestehenden Wärmeübertrager, wobei das Rohr vorzugsweise mit oberflächenvergrößernden Rippen oder Lamellen versehen ist, des weiteren bestehend aus einem innerhalb des Speichervolumens von oben nach unten verlaufenden Leitrohr aus schlecht wärmeleitendem Material, insbesondere aus Kunststoff,
dadurch gekennzeichnet, daß der Wärmetauscher zur geschichteten Entladung des Speichers im oberen Bereich des Speichervolumens angeordnet ist und aus einem spiralförmig gewundenen Rippenrohr (1) aufgebaut ist, dessen Kaltwasseranschluß (4), der gegebenenfalls innerhalb des Speichers isoliert ist, sich an dem innen bzw. unten gelegenen Ende der Rippenrohrspirale befindet und dessen Warmwasserausgang (5) am außen bzw. oben gelegenen Ende liegt, und daß das Rippenrohr (1) zwischen zwei Trennflächen (2) so angeordnet ist, daß das Speicherwasser durch die Zwischenräume zwischen den Rippen im Kreuzgegenstrom zum Brauchwasser durch den Wärmetauscher strömen muß, wobei der durch die Trennflächen gebildete Kanal in den Abströmkanal (6) mündet, der das Speicherwasser in den unteren Bereich des Speichers leitet, und die Trennflächen aus einem schlecht wärmeleitenden Material aufgebaut sind.

2. Warmwasser-Schichtenspeicher mit Gegenstromwärmetauscher zur geschichteten Beladung des Speichers, bestehend aus einem in dem Speichervolumen angeordneten, aus mehreren Rohrwindungen bestehenden Wärmeübertrager, wobei das Rohr vorzugsweise mit oberflächenvergrößernden Rippen oder Lamellen versehen ist, des weiteren bestehend aus einem innerhalb des Speichervolumens von unten nach oben verlaufenden Leitrohr aus isolierendem Material, insbesondere aus Kunststoff,
dadurch gekennzeichnet, daß der Wärmetauscher im unteren Bereich des Speichers angeordnet ist und aus einem spiralförmig gewundenen Rippenrohr (1) aufgebaut ist, dessen Anschluß für das heiße Wärmeträgermedium (8) des Heizkreises, der gegebenenfalls innerhalb des Speichers isoliert ist, sich an dem innen bzw. oben gelegenen Ende der Rippenrohrspirale befindet und dessen Ausgang für das abgekühlte Wärmeträgermedium (9) am außen bzw. unten gelegenen Ende liegt, und daß das Rippenrohr zwischen zwei Trennflächen (2) so angeordnet ist, daß das Speicherwasser durch die Zwischenräume zwischen den Rippen im Kreuzgegenstrom zum Heizkreis durch den Wärmetauscher strömen muß, wobei der durch die Trennflächen gebildete Kanal in den Aufströmkanal (6) mündet, der das Speicherwasser in den oberen Bereich des Speichers leitet, und die Trennflächen (2) aus einem schlecht wärmeleitenden Material aufgebaut sind.

3. Warmwasser-Schichtenspeicher nach den Ansprüchen 1 oder 2,
dadurch gekennzeichnet, daß der Druckverlust im gesamten Wärmetauscher ungefähr so groß ist, daß der sich einstellende mittlere Speicherwasserstrom ungefähr dem typischen Wasserstrom durch das Rippenrohr entspricht, bzw., bei Flüssigkeiten mit unterschiedlichen Wärmekapazitäten, daß sich die Produkte aus Massenstrom und spezifischer Wärmekapazität ungefähr entsprechen.

4. Warmwasser-Schichtenspeicher nach mindestes einem der Ansprüche 1 - 3,
dadurch gekennzeichnet, daß zwischen den Windungen des Rippenrohres auf beiden Seiten der Spirale Leitstrukturen angebracht sind, die eine möglichst gleichmäßige Durchströmung der Rippen auch in der Nähe des Kernrohres bewirken und gleichzeitig den Spalt zwischen Rippen und Trennflächen abdichten.

5. Warmwasser-Schichtenspeicher nach Anspruch 4,
dadurch gekennzeichnet, daß die Leitstruktur durch zwischen die Windungen eingelegte Gummischnüre (3) verwirklicht wird.

6. Warmwasser-Schichtenspeicher nach mindestens einem der Ansprüche 1 - 3,
dadurch gekennzeichnet, daß Rippenrohre mit eckigen, den Kanal bis zu den Wänden gleichmäßig ausfüllenden Rippen eingesetzt werden.

7. Warmwasser-Schichtenspeicher nach mindestens einem der Ansprüche 1 - 3,
dadurch gekennzeichnet, daß Rippenrohre (1) mit runden Rippen eingesetzt werden, deren Ränder an den Stellen, an denen sie an den Trennflächen anliegen, um 90° abgewinkelt sind.

8. Warmwasser-Schichtenspeicher nach mindestens einem der Ansprüche 1 - 7,
dadurch gekennzeichnet, daß die Rippenrohrspirale kegelförmig angeordnet ist.

9. Warmwasser-Schichtenspeicher mindestens einem der Ansprüche 1 - 7,
dadurch gekennzeichnet, daß die Rippenrohrspirale zylinderförmig angeordnet ist, mit keiner, einer oder mehreren sich unten anschließenden horizontalen oder kegelförmigen Windung(en).

10. Warmwasser-Schichtenspeicher nach mindestens einem der Ansprüche 1 - 7,
dadurch gekennzeichnet, daß das Rippenrohr (1) in Form einer horizontalen Spirale gewunden ist, an die sich eine oder mehrere vertikale oder kegelförmige Windungen anschließen.

## Claims

1. A layered hot water storage tank, comprising a heat exchanger comprising a plurality of pipe windings disposed in the tank volume, wherein the pipe is preferably provided with ribs or cooling fins to increase its surface area, and further comprising a feed pipe made from material with poor heat conducting properties which runs from top to bottom within the tank volume, especially made from plastic, characterised in that the heat exchanger is arranged for layered discharge of the tank in the upper area of the tank volume and is constructed from a spiral-shaped ribbed pipe (1), whose cold water connection (4), which may be insulated within the tank, is situated at the inner, or lower, end of the ribbed pipe spiral, and whose hot water output (5) is situated at the outer, or upper, end, and that the ribbed pipe (1) is disposed between two separating surfaces (2) in such a way that the tank water must flow via the spaces between the ribs, transversely against the consumption water current, through the heat exchanger, wherein the channel formed by the separating surfaces opens into the discharge channel (6) which takes the tank water into the lower area of the tank, and the separating surfaces are made from a material which has poor heat conducting properties.

2. A layered hot water storage tank with a countercurrent heat exchanger for layered charging of the tank, comprising a heat exchanger, disposed in the storage tank and comprising a plurality of pipe windings, wherein the pipe is preferably provided with ribs or cooling fins to increase its surface area, and further comprising a feed pipe made from insulating material which runs from top to bottom within the tank volume, especially made from plastic, characterised in that the heat exchanger is disposed in the lower area of the tank and is constructed from a spiral-shaped wound ribbed pipe (1), whose connection for the hot heat-carrier medium (8) of the heating circulation, which may be insulated within the tank, is located at the inner, or upper, end of the ribbed pipe spiral, and the output for the cooled heat-carrier medium (9) is at the outer or lower end, and that the ribbed pipe is disposed between two separating surfaces (2) in such a way that the tank water must flow via the spaces between the ribs, transversely against the consumption water current, through the heat exchanger, wherein the channel formed by the separating surfaces opens into the discharge channel (6) which takes the tank water into the upper area of the tank, and the separating surfaces (2) are made from a material which has poor heat conducting properties.

3. A layered hot water storage tank according to claims 1 or 2, characterised in that the pressure loss throughout the entire heat exchanger is approximately of a magnitude where the mean tank water current roughly corresponds to the typical water current through the ribbed pipe, or in the case of liquids with different heat capacities, the product of mass current approximately corresponds to that of specific heat capacity.

4. A layered hot water storage tank according to at least one of claims 1 to 3, characterised in that conducting structures are fitted between the windings on the ribbed pipes which facilitate the most uniform flow possible through the ribs, even in the area of the inner pipe, and at the same time they seal the gap between the ribs and the separating surfaces.

5. A layered hot water storage tank according to claim 4, characterised in that the conducting structure is realised by elastic cords (3) laid between the windings.

6. A layered hot water storage tank according to at least one of claims 1 to 3, characterised in that ribbed pipes, with angular ribs which uniformly fill the channel as far as the walls, are used.

7. A layered hot water storage tank according to at least one of claims 1 to 3, characterised in that ribbed tubes (1) with round ribs are used, the edges of which are angled at 90° at those points where they are in contact with the separating surfaces.

8. A layered hot water storage tank according to at least one of claims 1 to 7, characterised in that the ribbed pipe spiral is arranged conically.

9. A layered hot water storage tank according to at least one of claims 1 to 7, characterised in that the ribbed pipe spiral is arranged cylindrically, with either no, one or a plurality of horizontal or conical winding(s) connecting underneath.

10. A layered hot water storage tank according to at least one of claims 1 to 7, characterised in that the ribbed tube (1) is wound in the form of a horizontal spiral, to which one, or several, vertical or conical winding(s) is/are connected.

## Revendications

1. Ballon d'eau chaude à couches, composé d'un échangeur thermique contenu dans le volume du ballon et constitué de plusieurs spires de tuyau, sachant que le tuyau est de préférence muni de nervures ou de lamelles qui en agrandissent la surface, composé également d'un tube isolant en un matériau conduisant mal la chaleur, notamment en matière plastique, qui s'étend de haut en bas à l'intérieur du ballon. caractérisé en ce que l'échangeur thermique destiné à décharger le ballon par couches est situé dans la partie supérieure du volume du ballon et est constitué par un tuyau à nervures enroulé en spirale (1) dont la prise d'eau froide (4), qui est éventuellement isolée à l'intérieur du ballon, se trouve à l'extrémité du tuyau à nervures enroulé en spirale qui est située à l'intérieur ou en bas, et dont la sortie d'eau chaude (5) se trouve à l'extrémité située à l'extérieur ou en haut, et en ce que le tuyau à nervures (1) est disposé entre deux cloisons (2) de manière à ce que l'eau contenue dans le ballon soit obligée de circuler à travers les intervalles entre les nervures de l'échangeur thermique à contre-courant par rapport à l'eau sanitaire, sachant que le canal formé par les cloisons débouche dans le conduit d'écoulement (6) qui achemine l'eau du ballon dans la partie inférieure de ce dernier, et que les cloisons sont composées d'un matériau conduisant mal la chaleur.

2. Ballon d'eau chaude à couches comportant un échangeur thermique à contre-courant pour charger le ballon par couches, composé d'un échangeur thermique contenu dans le volume du ballon et constitué de plusieurs spires de tuyau, sachant que le tuyau est de préférence muni de nervures ou de lamelles qui en agrandissent la surface, composé également d'un tube isolant en un matériau conduisant mal la chaleur, notamment en matière plastique, qui s'étend de bas en haut à l'intérieur du ballon, caractérisé en ce que l'échangeur thermique est placé dans la partie inférieure du ballon et est constitué par un tuyau à nervures enroulé en spirale (1) dont l'arrivée d'agent caloporteur chaud (8) du circuit de chauffage, qui est éventuellement isolée à l'intérieur du ballon, se trouve à l'extrémité du tuyau à nervures enroulé en spirale qui est située à l'intérieur ou en haut, et dont la sortie de l'agent caloporteur refroidi (9) se trouve à l'extrémité située à l'extérieur ou en bas, et en ce que le tuyau à nervures est disposé entre deux cloisons (2) de manière à ce que l'eau contenue dans le ballon soit obligée de circuler à travers les intervalles entre les nervures de l'échangeur thermique à contre-courant par rapport au circuit de chauffage, sachant que le canal formé par les cloisons débouche dans le conduit d'écoulement (6) qui achemine l'eau du ballon dans la partie supérieure de ce dernier, et que les cloisons (2) sont composées d'un matériau conduisant mal la chaleur.

3. Ballon d'eau chaude à couches selon la revendication 1 ou 2, caractérisé en ce que la perte de charge dans l'ensemble de l'échangeur thermique est environ telle que le courant d'eau moyen à l'intérieur du ballon correspond environ au courant d'eau typique à travers le tuyau à nervures ou, dans le cas où les liquides ont des capacités thermiques différentes, telle que les produits du flux massique et de la capacité thermique spécifique se valent à peu près.

4. Ballon d'eau chaude à couches selon au moins l'une des revendications 1 à 3, caractérisé en ce que des structures de guidage sont fixées entre les spires du tuyau à nervures, de part et d'autre de la spirale, qui rendent le flux autour des nervures aussi uniforme que possible, même à proximité du tuyau central, et qui en même temps étanchent la fente entre les nervures et les cloisons.

5. Ballon d'eau chaude à couches selon la revendication 4, caractérisé en ce que la structure de guidage est constituée par des brins de caoutchouc (3) insérés entre les spires.

6. Ballon d'eau chaude à couches selon au moins l'une des revendications 1 à 3, caractérisé en ce que les tuyaux à nervures utilisés comportent des nervures anguleuses remplissant uniformément le canal jusqu'aux cloisons.

7. Ballon d'eau chaude à couches selon au moins l'une des revendications 1 à 3, caractérisé en ce que les tuyaux à nervures (1) utilisés comportent des nervures rondes dont les bords sont recourbés à 90° aux endroits auxquels elles sont appliquées contre les cloisons.

8. Ballon d'eau chaude à couches selon au moins l'une des revendications 1 à 7, caractérisé en ce que le tuyau à nervures enroulé en spirale est disposé de façon conique.

9. Ballon d'eau chaude à couches selon au moins l'une des revendications 1 à 7, caractérisé en ce que le tuyau à nervures enroulé en spirale est disposé de façon cylindrique, avec aucune, une ou plusieurs spire(s) horizontale(s) ou conique(s) s'y raccordant en bas.

10. Ballon d'eau chaude à couches selon au moins l'une des revendications 1 à 7, caractérisé en ce que le tuyau à nervures (1) est enroulé en forme de spirale horizontale à laquelle se raccordent une ou plusieurs spire(s) verticale(s) ou conique(s).
